# EUROPEAN PATENT SPECIFICATION

(11) **EP 2 787 571 B1**
(45) Date of publication and mention of the grant of the patent: **20.07.2016**
(21) Application number: 14154479.1
(22) Date of filing: 10.02.2014
(51) Int. Cl.: H01M 10/04, H01M 2/02

(54) **Rechargeable battery and method of manufacturing the same**
Wiederaufladbare Batterie und Verfahren zur Herstellung davon
Batterie rechargeable et son procédé de fabrication

(30) Priority: 02.04.2013 KR 20130035984
(43) Date of publication of application: 08.10.2014
(73) Proprietor: Samsung SDI Co., Ltd., Yongin-si, Gyeonggi-do (KR)
(72) Inventor: Kim, In, Yongin-si, Gyeonggi-do (KR); Kim, Eun-Jung, Yongin-si, Gyeonggi-do (KR); Choi, Soo-Seok, Yongin-si, Gyeonggi-do (KR)
(74) Representative: Gulde & Partner

(56) References cited:
- EP-A1- 2 528 131
- JP-A- 2009 170 137
- US-A1- 2011 269 018

## Description

### FIELD OF THE INVENTION

Embodiments of the present invention generally relate to a method of manufacturing a rechargeable battery having an electrode assembly that is impregnated with an electrolyte solution.

### DESCRIPTION OF THE RELATED ART

A rechargeable battery can repeatedly perform charge and discharge, unlike a primary battery. A rechargeable battery of a small capacity is often used for a small portable electronic device like a mobile phone or a laptop computer and a camcorder, and a rechargeable battery of a large capacity is often used as a power source for driving a motor of a hybrid vehicle and an electric vehicle.

For example, the rechargeable battery may include an electrode assembly that performs charge and discharge operation, a case that houses the electrode assembly, and a cap plate that is coupled to an opening of the case. The electrode assembly may be formed in a jelly roll state by stacking and spiral-winding electrodes at both surfaces of a separator.

The rechargeable battery can be produced by inserting the electrode assembly into the case and coupling the cap plate to the case, injecting an electrolyte solution into an electrolyte injection port that is formed in the cap plate, and by impregnating the electrolyte solution in the electrode assembly.

Therefore, it is difficult to manufacture an electrode assembly that fully contains an electrolyte solution. That is, a capacity and an output of the rechargeable battery may deteriorate. A portion of the electrolyte solution that is not contained in the electrode assembly may remain at the bottom of the inside of the case. This remaining portion of the electrolyte solution forms a current pathway between the electrode assembly and the case while driving the rechargeable battery and may thus cause a short circuit.

Further, when the electrode assembly does not contain sufficient electrolyte solution, the electrolyte solution is non-uniformly distributed at an interface of the separator and the electrode and the separator. Non-uniform distribution of the electrolyte solution may form a gas trap at the interface of the separator and the electrode.

A gas trap that is formed within the electrode assembly causes further non-uniformly in the distribution of the electrolyte solution at an interface of the separator and the electrode and the separator and thus causes deposition of lithium (Li) salt and deteriorates safety of a battery.

The above information disclosed in this Background section is only for enhancement of understanding of the background of the described technology and therefore it may contain information that does not form the prior art that is already known in this country to a person of ordinary skill in the art.

### SUMMARY

Embodiments of the present invention are directed to a method of manufacturing a rechargeable battery, the method including: forming a first assembly by assembling a cap plate and a spiral-wound electrode assembly having a first electrode at a first surface of a separator and a second electrode at a second surface of the separator; inserting the first assembly into an electrolyte solution chamber to form a second assembly comprising the separator, a first interface of the first electrode and the separator, and a second interface of the second electrode and the separator impregnated with an electrolyte solution; wrapping the electrode assembly with an insulation tape by drawing out the second assembly from the electrolyte solution chamber to form a third assembly; and completing the rechargeable battery by inserting the third assembly into a case.

The inserting the first assembly into the electrolyte solution may include applying a vacuum pressure to the electrolyte solution chamber.

According to an embodiment of the present invention, by impregnating an electrode assembly with an electrolyte solution in a first assembly state that is assembled with the electrode assembly and a cap plate, an interface of a separator and an electrode and the separator can fully contain an electrolyte solution. Therefore, distribution of an electrolyte solution becomes substantially uniform in an interface of a separator and an electrode and the separator.

By wrapping an electrode assembly of a first assembly that is impregnated with an electrolyte solution with an insulation tape and by inserting the wrapped (or coated) electrode assembly into a case, an electrolyte solution that is not contained in the electrode assembly does not remain between the outside of the insulation tape and an inner surface of the case.

### BRIEF DESCRIPTION OF THE DRAWINGS

FIG. 1 is a perspective view of a rechargeable battery according to an embodiment of the present invention.
FIG. 2 is a cross-sectional view illustrating the rechargeable battery taken along line II-II of FIG. 1.
FIG. 3 is a perspective view illustrating a state in which an electrode assembly is wrapped (or coated) with an insulation tape according to one embodiment of the present invention.
FIG. 4 is a cross-sectional view taken along line IV-IV of FIG. 2.
FIG. 5 is a diagram of an insulation tape according to one embodiment of the present invention.
FIG. 6 is a perspective view illustrating a process of wrapping an insulation tape according to one embodiment of the present invention.
FIG. 7 is a flowchart illustrating a method of manufacturing a rechargeable battery according to an embodiment of the present invention.

### DETAILED DESCRIPTION

Embodiments of the present invention present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

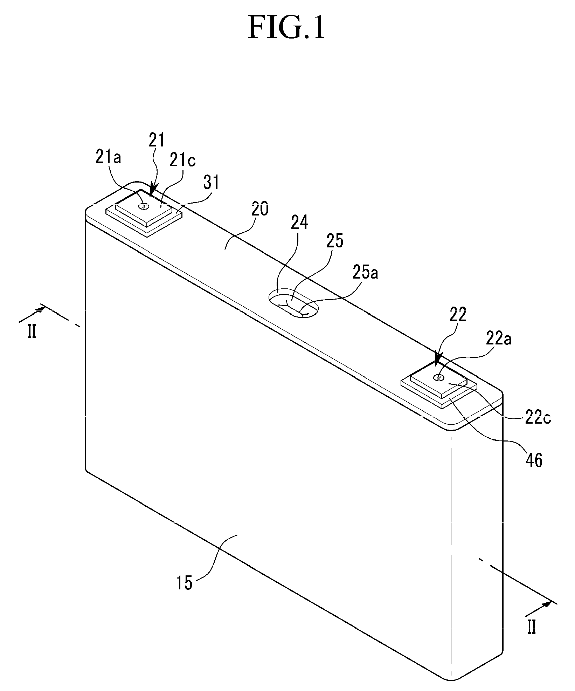

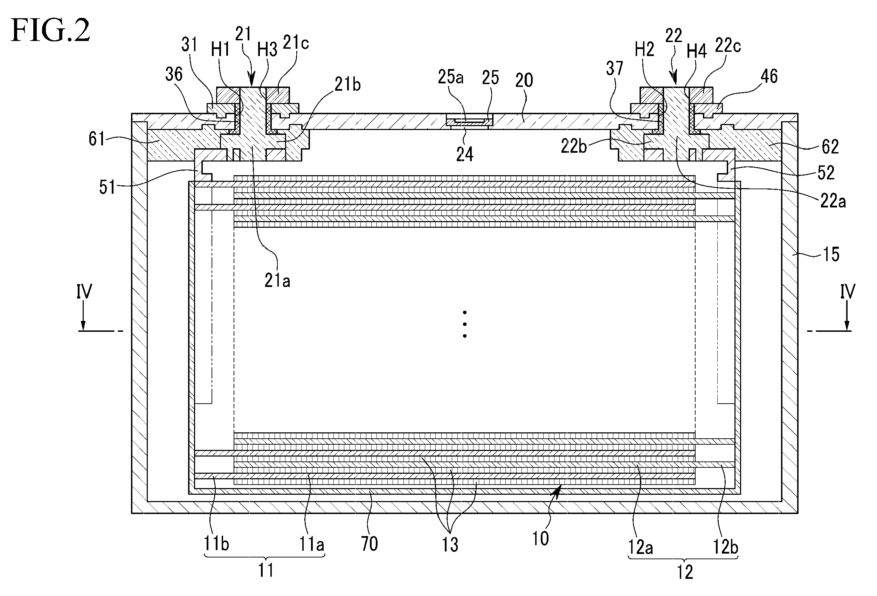

FIG. 1 is a perspective view of a rechargeable battery according to an embodiment of the present invention, and FIG. 2 is a cross-sectional view illustrating the rechargeable battery taken along line II-II of FIG. 1. Referring to FIGS. 1 and 2, the rechargeable battery according to the present embodiment includes an electrode assembly 10 that is impregnated with an electrolyte solution to charge and discharge a current, an insulation tape 70 that wraps (or coats ) the electrode assembly 10 that contains an electrolyte solution, a case 15 that houses the wrapped electrode assembly 10, a cap plate 20 that is coupled to an opening portion of the case 15, and an electrode terminal (e.g., the negative terminal 21 and the positive terminal 22) that is installed in the cap plate 20.

For example, the electrode assembly 10 is formed by disposing electrodes (e.g., a negative electrode 11 and a positive electrode 12) at both (or opposite) surfaces of a separator 13, which is an insulator, and by spiral-winding the negative electrode 11, the separator 13, and the positive electrode 12 together in a jelly roll.

The negative electrode 11 and the positive electrode 12 include coating regions 11 a and 12a in which an active material is applied to (or coated onto) a current collector of a metal plate and uncoated regions 11 b and 12b, respectively, that are formed with an exposed current collector, because an active material is not coated onto these regions.

The uncoated region 11 b of the negative electrode 11 is formed in an end portion of one side of the negative electrode 11 along the spiral-wound negative electrode 11. The uncoated region 12b of the positive electrode 12 is formed in an end portion of one side of the positive electrode 12 along the spiral-wound positive electrode 12. The uncoated regions 11 b and 12b are each disposed at both (or opposite) ends of the electrode assembly 10.

The case 15 is formed in an approximately cuboidal shape to form a space that houses the electrode assembly 10 inside. An opening portion of the case 15 is formed at one side of a cuboid to enable the insertion of the electrode assembly 10 from the outside into the internal space.

The cap plate 20 is installed in an opening portion of the case 15 to close and seal the case 15. For example, the case 15 and the cap plate 20 may be made of aluminum which may be welded to each other.

The electrode assembly 10 is impregnated in an electrolyte solution in a state in which the electrode assembly 10 is connected to the cap plate 20 and is wrapped (or coated) with the insulation tape 70. After the electrode assembly 10 is inserted into the case 15, the cap plate 20 is welded to an opening portion of the case 15.

Further, the cap plate 20 has at least one opening and has, for example, terminal holes H1 and H2 and a vent hole 24. The negative terminal 21 and the positive terminal 22 are installed at the terminal holes H1 and H2, respectively, of the cap plate 20 to be electrically connected to the electrode assembly 10.

That is, the negative terminal 21 is electrically connected to the negative electrode 11 of the electrode assembly 10, and the positive terminal 22 is electrically connected to the positive electrode 12 of the electrode assembly 10. Therefore, connections to the electrode assembly 10 are drawn out to the outside of the case 15 through the negative terminal 21 and the positive terminal 22.

Because the negative terminal 21 and the positive terminal 22 have substantially the same structure inside the cap plate 20, the same structure is together described, and different structures are formed at the outside of the cap plate 20 and are separately described.

The negative and positive terminals 21 and 22 include plate terminals 21 c and 22c that are disposed at the outside of the cap plate 20 at locations corresponding to the terminal holes H1 and H2, and rivet terminals 21 a and 22a that are electrically connected to the electrode assembly 10 and that are fastened to the plate terminals 21 c and 22c while penetrating through the terminal holes H1 and H2, respectively.

The plate terminals 21 c and 22c have through-holes H3 and H4, and the rivet terminals 21 a and 22a penetrate through the terminal holes H1 and H2 to an upper end portion and are inserted into the through-holes H3 and H4, respectively. The negative and positive terminals 21 and 22 further include flanges 21 b and 22b that are integrally and widely formed in the rivet terminals 21 a and 22a, respectively, located at the inside of the cap plate 20.

Negative and positive gaskets 36 and 37 are installed between the rivet terminals 21 a and 22a of the negative and positive terminals 21 and 22 and an inner surface of the terminal holes H1 and H2, respectively, of the cap plate 20, and seal and electrically insulate the rivet terminals 21 a and 22a of the negative and positive terminals 21 and 22 from the cap plate 20.

The negative and positive gaskets 36 and 37 further extend and are installed (or located) between the flanges 21 b and 22b and an inner surface of the cap plate 20 to further seal and electrically insulate the flanges 21 b and 22b from the cap plate 20. That is, the negative and positive gaskets 36 and 37 prevent an electrolyte solution from leaking through the terminal holes H1 and H2 by installing the negative and positive terminals 21 and 22 in the cap plate 20.

Negative and positive lead tabs 51 and 52 electrically connect the negative and positive terminals 21 and 22 to the negative electrode 11 and the positive electrode and 12, respectively, of the electrode assembly 10. That is, by coupling the negative and positive lead tabs 51 and 52 to the lower end of the rivet terminals 21 a and 22a and by caulking the lower end, the negative and positive lead tabs 51 and 52 are connected to the lower end of the rivet terminals 21 a and 22a while being supported by the flanges 21 b and 22b.

Negative and positive insulation members 61 and 62 are installed between the negative and positive lead tabs 51 and 52 and the cap plate 20, respectively, to electrically insulate the negative and positive lead tabs 51 and 52 from the cap plate 20.

Further, the negative and positive insulation members 61 and 62 are coupled to the cap plate 20 at one side and enclose the negative and positive lead tabs 51 and 52 and the rivet terminals 21 a and 22a and the flanges 21 b and 22b at the other one side to stabilize a connection structure thereof.

An external insulation member 31 is interposed between the plate terminal 21 c of the negative terminal 21 side and the cap plate 20 to electrically insulate the plate terminal 21 c from the cap plate 20. That is, the cap plate 20 maintains a state that is electrically insulated from the negative terminal 21.

A conductive top plate 46 is interposed between the plate terminal 22c and the cap plate 20 of the positive terminal 22 side to electrically connect the plate terminal 22c to the cap plate 20. That is, the cap plate 20 maintains a state that is electrically connected to the positive terminal 22.

By coupling the top plate 46 and the plate terminal 22c to an upper end portion of the rivet terminal 22a, the upper end portion is riveted or welded and thus the top plate 46 and the plate terminal 22c are fastened to the upper end of the rivet terminal 22a. The plate terminal 22c is installed at the outside of the cap plate 20 in a state in which the top plate 46 is interposed.

The positive electrode gasket 37 prevents or insulates the rivet terminal 22a and the top plate 46 from being electrically directly connected. That is, the rivet terminal 22a is electrically connected to the top plate 46 through the plate terminal 22c. Therefore, the top plate 46 and the case 15 have positive polarity.

In order to discharge an internal pressure of a rechargeable battery and a generated gas, the vent hole 24 is closed and sealed by a bent plate 25. When an internal pressure of the rechargeable battery reaches a pressure (e.g., a predetermined pressure), the bent plate 25 is cutout (e.g., broken) to open the vent hole 24. The vent plate 25 has a notch 25a that facilitates breakage.

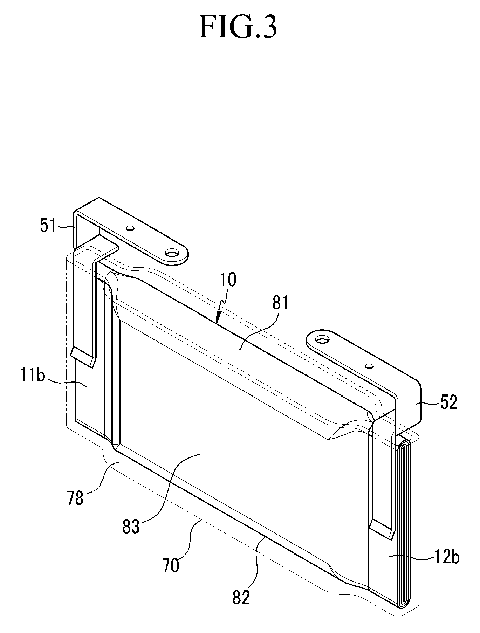

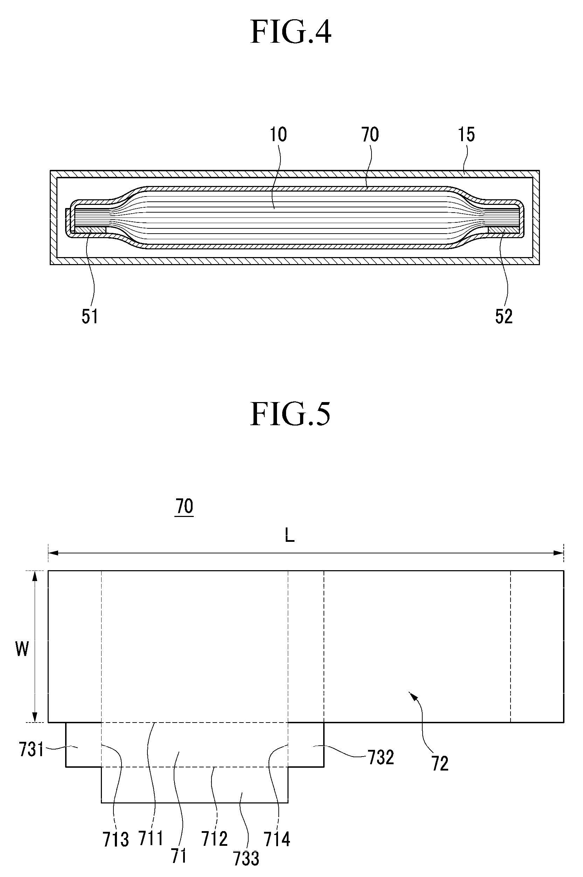

FIG. 3 is a perspective view illustrating a state in which the electrode assembly 10 is wrapped (or coated) with the insulation tape 70 and FIG. 4 is a cross-sectional view taken along line IV-IV of FIG. 2. Referring to FIGS. 3 and 4, the electrode assembly 10 includes curved portions 81 and 82 that are at an upper portion and a lower portion and a planar portion 83 that connects the curved portions 81 and 82 by stacking and spiral-wound the negative electrode 11 and the positive electrode 12 at both surfaces of the separator 13.

In the electrode assembly 10, the uncoated regions 11 b and 12b are provided at the sides (or ends) of the curved portions 81 and 82 and a planar portion 83. The uncoated regions 11 b and 12b are electrically connected to the negative and positive terminals 21 and 22 through the negative and positive lead tabs 51 and 52, respectively.

The insulation tape 70 wraps (or coats) the electrode assembly 10 that is impregnated with an electrolyte solution. In this case, because the negative and positive lead tabs 51 and 52 are connected to the uncoated regions 11 b and 12b, respectively, the insulation tape 70 together wraps the negative and positive lead tabs 51 and 52 at the uncoated regions 11 b and 12b side.

The insulation tape 70 is opened toward (or has an opening facing) the cap plate 20 and encloses a lower portion and a side portion of the electrode assembly 10. For example, the insulation tape 70 opens the curved portion 81 of an upper portion of the electrode assembly 10 and wraps the curved portion 82, the planar portion 83, the uncoated regions 11 b and 12b, and the negative and positive lead tabs 51 and 52 of the lower portion.

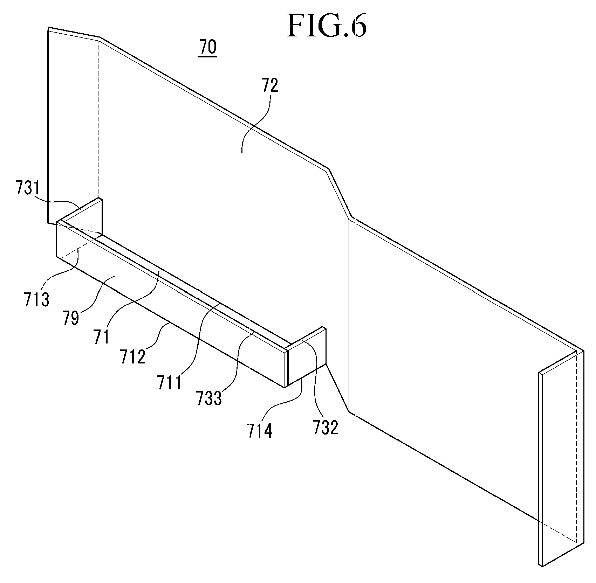

FIG. 5 is a developed (or unfolded) diagram of the insulation tape 70, and FIG. 6 is a perspective view illustrating a process of wrapping (or coating) the insulation tape 70. Referring to FIGS. 5 and 6, the insulation tape 70 includes a bottom portion 71, a peripheral (or circumferential) portion 72, a first finish portion 731, a second finish portion 732, and a third finish portion 733.

The bottom portion 71 is formed in a quadrangle (or rectangle) corresponding to a lower curved portion 82 of the electrode assembly 10 and has a first long edge 711, a second long edge 712, a first short edge 713, and a second short edge 714.

The peripheral (or circumferential) portion 72 is connected to the first long edge 711 of the bottom portion 71 to have a width W and a length L enclosing the planar portion 83 and the uncoated regions 11 b and 12b and is formed to be attached at both ends.

The first finish portion 731, the second finish portion 732, and the third finish portion 733 are connected to the first short edge 713, the second short edge 714, and the second long edge 712, respectively, of the bottom portion 71 to be attached to the peripheral portion 72 to correspond to the lower curved portion 82 of the electrode assembly 10.

Therefore, the first finish portion 731, the second finish portion 732, and the third finish portion 733 connect the bottom portion 71 and the peripheral portion 72 and maintain an electrolyte solution that is contained in the electrode assembly 10 within the insulation tape 70. An electrolyte solution that is not contained in the electrode assembly 10 does not remain (or accumulate) in a space that is formed between the insulation tape 70 and an inner surface of the case 15. In other words, the insulation tape 70 forms on the one hand an outer box 78 shown in Fig. 3 and enclosing both the lower curved portion 82 and the planar portion 83 of the electrode assembly 10 up tot he upper curved portion 81 and addtionally an inner box 79 enclosing only the lower curved portion 82 of the electrode assembly 10. The outer box 78 has an opening at its top toward the cap plate 20, the inner box 79 has an opening at its top for accommodating the lower curved portion 82 therein. Thus, in addition to an outer box 78, an additionally box like element accommodates the electrode assembly 10 further preventing electrolyte solution penetration to the case 15 from the electrode assembly 10 in a direction of gravity.

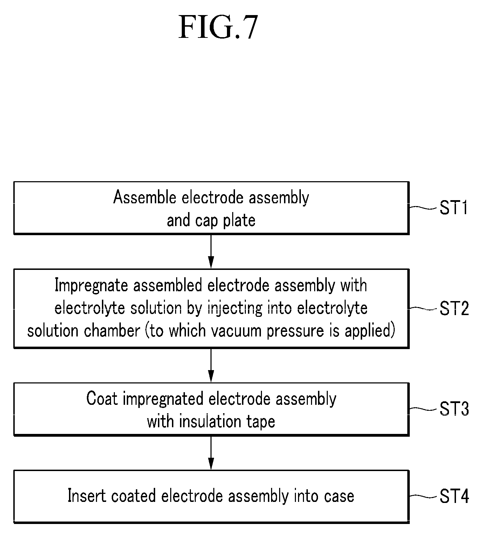

FIG. 7 is a flowchart illustrating a method of manufacturing a rechargeable battery according to an embodiment of the present invention. Referring to FIG. 7, a method of manufacturing a rechargeable battery according to an embodiment of the present invention includes first operation ST1 of forming a first assembly by assembling the electrode assembly 10 and the cap plate 20, second operation ST2 of forming a second assembly by impregnating the first assembly with an electrolyte solution, third operation ST3 of forming a third assembly by wrapping (or coating) the second assembly with the insulation tape 70, and fourth operation ST4 of inserting the third assembly into the case 15.

At first operation ST1, the spiral-wound electrode assembly 10 having the negative electrode 11 and the positive electrode 12 at both surfaces of the separator 13 is assembled in the cap plate 20. At the first operation ST1, a first assembly is formed by a process of installing the negative and positive terminals 21 and 22 and the negative and positive lead tabs 51 and 52 that are connected to the electrode assembly 10 into the terminal holes H1 and H2 of the cap plate 20.

At second operation ST2, an electrolyte solution is impregnated into the electrode assembly 10 by dipping the first assembly into an electrolyte solution chamber, such that a second assembly is formed. That is, the second assembly includes the separator 13 , the negative electrode 11 and the positive electrode 12, and thus the electrolyte solution of the second assembly is impregnated into the separator 13 as well as into interfaces between the separator 13 and the negative or positive electrode 11 or 12.

At second operation ST2, by applying a vacuum pressure to the electrolyte solution chamber, the electrolyte solution is promoted to be impregnated into the separator 13, and the interfaces between the separator 13 and the negative electrode 11 or the positive electrode 12.

**(Table 1)**

| | Porosity of separator before impregnation | Porosity of separator after impregnation |
|---|---|---|
| Conventional art | 60% | more than 50% |
| Embodiment | | 30-50% |

Referring to Table 1, in the conventional art, after an electrode assembly is assembled in a case, when an electrolyte solution is injected, a separator has a porosity exceeding 50%. According to the method of manufacturing a rechargeable battery of the present embodiment, an electrolyte solution can be impregnated into the electrode assembly 10 more efficiently, , and thus the separator 13 has a porosity of 30-50% after impregnation. A porosity of the separator 13 of the present embodiment is lower than that of a separator of the conventional art.

Because the separator 13 of the same material has a lower porosity, it can be seen that the electrode assembly 10 of the present embodiment contains more electrolyte solution than the electrode assembly of the conventional art. That is, the separator 13, and the interfaces between the separator 13 and the negative electrode 11 or the positive electrode 12 of the present embodiment can more fully contain an electrolyte solution, and uniformly maintain distribution of an electrolyte solution.

At third operation ST3, by wrapping (or coating) the electrode assembly 10 with the insulation tape 70 after drawing out the second assembly from the electrolyte solution chamber, a third assembly is formed. That is, the third assembly is in a state that prevents or blocks an electrolyte solution that is contained in the electrode assembly 10 from being leaked by the insulation tape 70.

In this case, by opening the upper curved portion 81 of the electrode assembly 10, the insulation tape 70 allows a gas that is generated at the inside of the electrode assembly 10 to reach the vent hole 24. In some embodiments, the insulation tape may open only a portion of the upper curved portion in the electrode assembly.

At fourth operation ST4, by inserting the third assembly into the case 15, the rechargeable battery is complete. In the rechargeable battery of the present embodiment, by wrapping (or coating) the electrode assembly 10 with the insulation tape 70, an electrolyte solution that is contained in the electrode assembly 10 does not remain at (e.g., does not contact) an inner surface of the case 15.

## Claims

1. A method of manufacturing a rechargeable battery, the method comprising:
forming a first assembly by assembling a cap plate (20) and a spiral-wound electrode assembly (10) having a first electrode (11) at a first surface of a separator (13) and a second electrode (12) at a second surface of the separator (13) (ST1);
inserting the first assembly into an electrolyte solution chamber to form a second assembly comprising the separator (13), a first interface of the first electrode (11) and the separator (13), and a second interface of the second electrode (12) and the separator (13) impregnated with an electrolyte solution (ST2);
wrapping the electrode assembly (10) with an insulation tape (70) by drawing the second assembly from the electrolyte solution chamber to form a third assembly; and
inserting the third assembly into a case (15) (ST3).

2. The method of claim 1, wherein the inserting the first assembly into the electrolyte solution comprises applying a vacuum pressure to the electrolyte solution chamber.

3. The method of claim 1 or 2, wherein the wrapping step of the electrode assembly comprises the steps of:
forming an inner box (79) around a lower curved portion (82) of the electrode assembly, and then
forming an outer box (78) around the inner box (79) enclosing the lower curved portion (82) and a planar portion (83) of the electrode assembly (10).

4. The method of one of claims 1 or 2, wherein the wrapping step comprises:
folding a first long edge (711), a second long edge (712), a first short edge (713), and a second short edge (714) that form a rectangle around a bottom portion (71) attached to a peripheral portion (72) of the insulation tape (70),
folding a first finish portion (731), a second finish portion (732), and a third finish portion (733) that are connected to the first short edge (711), the second short edge (714), and the second long edge (712), respectively, of the bottom portion (71) to receive the a lower curved portion (82) of the electrode assembly (10) therein,
folding a peripheral portion (72) connected to the first long edge (711) of the bottom portion (71) of the insulation tape (70) to enclose a planar portion (83) and an uncoated region (11 b) of the electrode assembly (10) together with a lead tab (51).

## Patentansprüche

1. Verfahren zur Herstellung einer wiederaufladbaren Batterie, wobei das Verfahren aufweist:
Ausbilden einer ersten Anordnung durch Anordnen einer Deckplatte (20) und einer spiralförmig gewickelten Elektrodenanordnung (10), die eine erste Elektrode (11) an einer ersten Oberfläche eines Separators (13) und eine zweite Elektrode (12) an einer zweiten Oberfläche des Separators (13) aufweist (ST1);
Einführen der ersten Anordnung in eine Elektrolytlösungskammer, um eine zweite Anordnung, die den Separator (13), eine erste Schnittstelle der ersten Elektrode (11) und des Separators (13) und eine zweite Schnittstelle der zweiten Elektrode (12) und des Separators (13), die mit einer Elektrolytlösung imprägniert sind, aufweist, auszubilden (ST2);
Umhüllen der Elektrodenanordnung (10) mit einem Isolierband (70) durch Herausziehen der zweiten Anordnung aus der Elektrolytlösungskammer, um eine dritte Anordnung auszubilden; und
Einführen der dritten Anordnung in ein Gehäuse (15) (ST3).

2. Verfahren nach Anspruch 1, wobei das Einführen der ersten Anordnung in die Elektrolytlösung das Beaufschlagen der Elektrolytlösungskammer mit einem Vakuumdruck aufweist.

3. Verfahren nach Anspruch 1 oder 2, wobei der Schritt des Umhüllens der Elektrodenanordnung folgende Schritte aufweist:
Ausbilden eines inneren Kastens (79) um einen unteren gekrümmten Abschnitt (82) der Elektrodenanordnung herum, und dann
Ausbilden eines äußeren Kastens (78) um den inneren Kasten (79) herum, der den unteren gekrümmten Abschnitt (82) und einen ebenen Abschnitt (83) der Elektrodenanordnung (10) umschließt.

4. Verfahren nach einem der Ansprüche 1 oder 2, wobei der Schritt des Umhüllens aufweist:
Falten eines ersten langen Rands (711), eines zweiten langen Rands (712), eines ersten kurzen Rands (713) und eines zweiten kurzen Rands (714), die ein Rechteck um einen Bodenabschnitt (71), der an einem Umfangsabschnitt (72) des Isolierbands (70) befestigt ist, ausbilden,
Falten eines ersten Endabschnitts (731), eines zweiten Endabschnitts (732) und eines dritten Endabschnitts (733), die jeweils mit dem ersten kurzen Rand (711), dem zweiten kurzen Rand (714) und dem zweiten langen Rand (712) des Bodenabschnitts (71) verbunden sind, um den unteren gekrümmten Abschnitt (82) der Elektrodenanordnung (10) darin aufzunehmen,
Falten eines Umfangabschnitts (72), der mit dem ersten langen Rand (711) des Bodenabschnitts (71) des Isolierbands (70) verbunden ist, um einen ebenen Abschnitt (83) und einen unbeschichteten Bereich (11b) der Elektrodenanordnung (10) zusammen mit einer Anschlussfahne (51) zu umschließen.

## Revendications

1. Procédé de fabrication d'une batterie rechargeable, le procédé comprenant le fait :
de former un premier ensemble en assemblant une plaque de capuchon (20) et un ensemble d'électrodes enroulées en spirale (10) ayant une première électrode (11) au niveau d'une première surface d'un séparateur (13) et une deuxième électrode (12) au niveau d'une deuxième surface du séparateur (13) (ST1) ;
d'insérer le premier ensemble dans une chambre de solution électrolytique pour former un deuxième ensemble comprenant le séparateur (13), une première interface de la première électrode (11) et du séparateur (13), et une deuxième interface de la deuxième électrode (12) et du séparateur (13) imprégné d'une solution électrolytique (ST2) ;
d'envelopper l'ensemble d'électrodes (10) avec un ruban isolant (70) en tirant le deuxième ensemble de la chambre de solution électrolytique pour former un troisième ensemble ; et
d'insérer le troisième ensemble dans un boîtier (15) (ST3) .

2. Procédé de la revendication 1, dans lequel l'insertion du premier ensemble dans la solution électrolytique comprend le fait d'appliquer une pression à vide à la chambre de solution électrolytique.

3. Procédé de la revendication 1 ou 2, dans lequel l'étape d'enveloppement de l'ensemble d'électrodes comprend les étapes qui consistent :
à former une boîte intérieure (79) autour d'une partie incurvée inférieure (82) de l'ensemble d'électrodes, et ensuite
à former une boîte extérieure (78) autour de la boîte intérieure (79) enfermant la partie incurvée inférieure (82) et une partie plane (83) de l'ensemble d'électrodes (10) .

4. Procédé de l'une des revendications 1 ou 2, dans lequel l'étape d'enveloppement comprend le fait :
de plier un premier bord long (711), un deuxième bord long (712), un premier bord court (713) et un deuxième bord court (714) qui forment un rectangle autour d'une partie de fond (71) fixée à une partie périphérique (72) du ruban isolant (70),
de plier une première partie terminale (731), une deuxième partie terminale (732) et une troisième partie terminale (733) qui sont reliées au premier bord court (711), au deuxième bord court (714) et au deuxième bord long (712), respectivement, de la partie de fond (71) pour recevoir la partie incurvée inférieure (82) de l'ensemble d'électrodes (10) dedans,
de plier une partie périphérique (72) reliée au premier bord long (711) de la partie de fond (71) du ruban isolant (70) pour enfermer une partie plane (83) et une région non revêtue (11b) de l'ensemble d'électrodes (10) conjointement avec une patte de connecteur (51).
